# EUROPEAN PATENT APPLICATION

(11) **EP 0 591 743 A1**
(43) Date of publication of application: **13.04.1994**
(21) Application number: 93115066.8
(22) Date of filing: 20.09.1993
(51) Int. Cl.: G01S 11/12

(54) **Device for detecting relative positions between vehicles, principally for anti-collision purposes**

(30) Priority: 05.10.1992 IT TO920802
(71) Applicant: GILARDINI S.p.A., I-10154 Turin (IT)
(72) Inventor: Burzio, Gianfranco, I-10022 S Bernardo di Carmagnola, Torino (IT); Lupo, Elio, c/o Gilardini S.P.A., I-10078 Venaria Reale, Torino (IT)
(74) Representative: Marchitelli, Mauro

(57) **Abstract**

The device (1) to be associated with an external rear-view mirror (R) of a motor vehicle (V1) comprises a CCD-type optical sensor (2) and an electronic processing unit (3) connected to the on-board information system (5) for detecting and indicating:
- the presence of other approaching vehicles (V2), and
- the risk of collision with the vehicle (V1) on which the device is mounted, on the basis of the prediction of the intentions of the driver of the vehicle (V1).

## Description

The present invention relates to devices for detecting relative positions between vehicles and concerns in particular devices to be associated with a vehicle rear-view mirror to detect the relative positions of other vehicles in lanes adjacent to the lane in which the said vehicle is travelling.

The object of devices of this type is essentially to reduce the risks of collision owing to movement, resulting from a change of lane or overtaking, to a lane which is already occupied by another vehicle. During a manoeuvre of this type, risks arise as a result of the fact that there is a zone not included in the direct field of vision of the driver of the vehicle nor in the fields of vision afforded by the rear-view mirrors mounted on the vehicle. The presence of this so-called dark or blind zone is the source of the abovementioned risks of collision.

Further, owing to distractions the driver frequently does not adequately observe the rear-view mirror before starting the manoeuvre. This behaviour is also a considerable source of risks of collisions.

Devices have recently been proposed for detecting movements and/or relative positions of vehicles in order to reduce the said risks. Devices of this nature are typically based on the radar principle and operate in the microwave or infra-red bands. However, the known devices have various disadvantages which reduce their usefulness.

A first disadvantage is due to the costs: in fact, detectors using microwave-type radar devices tend to be relatively expensive which renders their installation in the majority of vehicles currently in production difficult to justify. A second disadvantage, common to all the devices known hitherto, derives from the typical conditions of use of present vehicles. It is in fact known that, when a vehicle is being driven, in particular in urban areas, there are frequently other vehicles in the zone monitored by the said devices. It is therefore impossible to generate a signal every time the presence of a vehicle is detected in the monitored zone since this would render the signal itself practically useless or would distract the driver's attention in a dangerous fashion.

It is thus necessary for the signal to be transmitted to the driver of the vehicle only in potentially dangerous situations. For this purpose it is necessary to know the driver's intentions since potentially dangerous situations are those in which the driver is on the point of moving to one side to change lane or to overtake.

For this purpose, some known devices provide for the actuation of the danger signal only in cases in which the driver has activated a direction indicator, thus showing his intention of changing direction or moving to one side. However, this arrangement is insufficient since, as is well known, it frequently happens that a driver performs a manoeuvre of this type without previously activating the direction indicator.

The object of the present invention is to provide a device enabling the above disadvantages to be overcome satisfactorily yet still having a reasonable cost such that it can be installed widely.

According to the present invention, this object is achieved by a device having the characteristics mentioned specifically in the appended claims.

Advantages and characteristics of the present invention will become apparent from the following detailed description, given with reference to the appended drawings, provided by way of non-limiting example and in which:
- Figure 1 shows schematically, viewed from above, the areas which are to be covered by the use of the device according to the invention;
- Figure 2 shows schematically an embodiment of the device according to the present invention;
- Figure 3 shows schematically an opto-electronic sensor forming part of the device according to the present invention;
- Figure 4 shows the structure of the device according to the present invention in the form of a block diagram;
- Figure 5 shows schematically the operation of the sensors in Figure 3; and
- Figures 6 and 7 are two graphs illustrating the operational criteria of the device according to the invention.

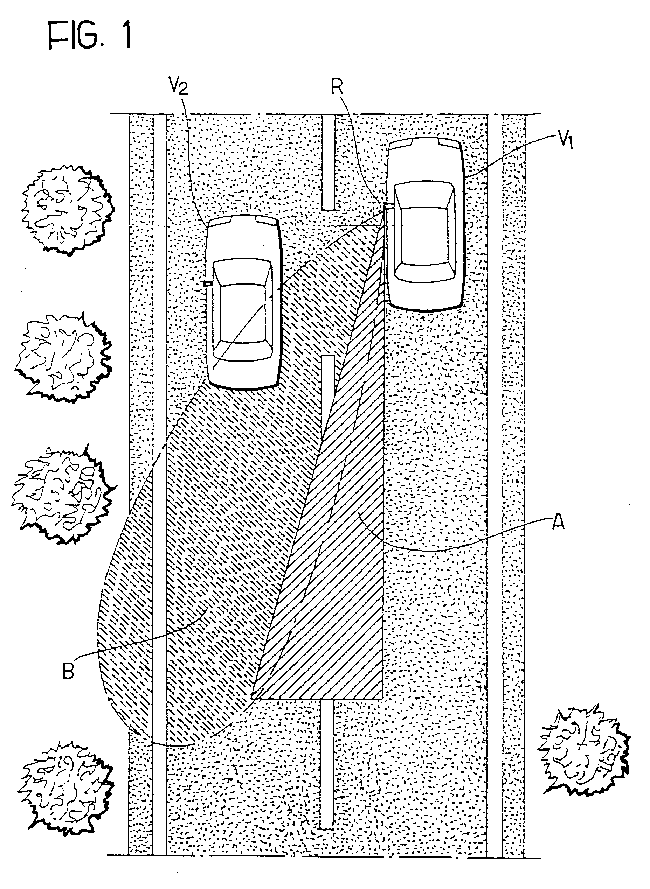

Figure 1 shows schematically the manner in which the rear-view mirrors conventionally mounted on motor vehicles are not able to provide the driver with complete vision of the space to the rear.

In the example illustrated, V1 indicates a first car provided with a rear-view mirror R enabling the driver to see the space behind the vehicle over an angular field A (first spatial region) which extends behind the vehicle V1 for a given angular amplitude (typically of the order of 18-20^{o}). Thus, a wide dark or blind area B (second spatial region) exists which is not "covered" by the rear-view mirror R and which becomes increasingly wide as it approaches the vehicle V1.

As a result of the presence of a dark or blind area of this type, another vehicle, such as the car V2, overtaking in an adjacent lane, is practically invisible to the driver of the vehicle V1 looking in the rear-view mirror R. As stated above, this fact can cause dangerous driving conditions with risks of collision in the event of the driver of the vehicle V1 deciding to move to one side towards the left hand side in the direction of travel.

One possible embodiment of the device according to the invention will now be described in detail.

The function of the device is to monitor the presence of vehicles in the blind or dark area indicated B in Figure 1. For this purpose, the device comprises an opto-electronic sensor and an electronic processing unit and can advantageously be incorporated, totally or partially, inside the rear-view mirror of the vehicle.

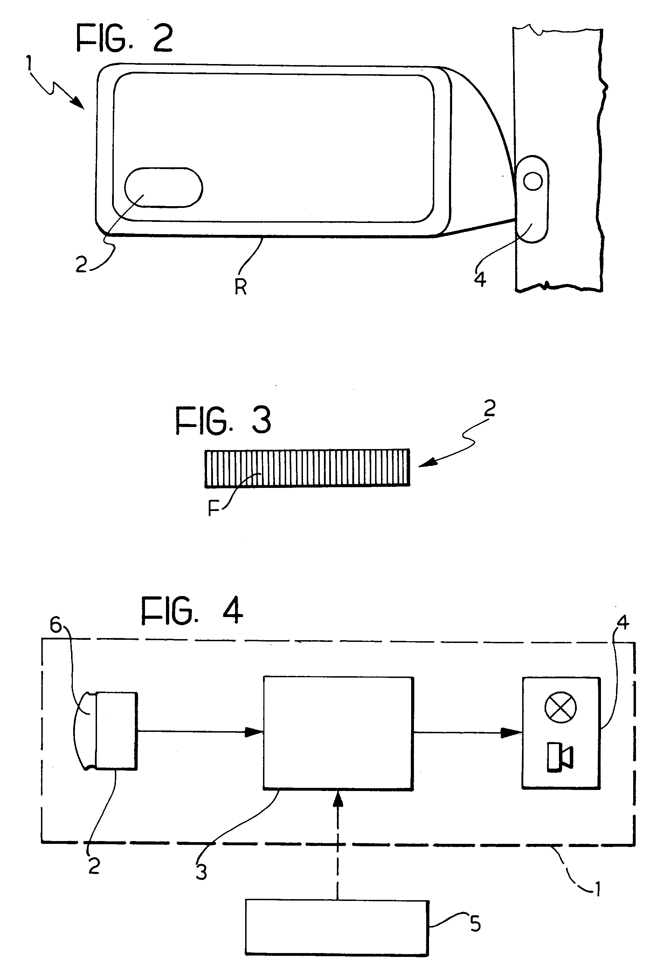

Figure 2 shows a rear-view mirror R containing the device, indicated 1, according to the present invention. The opto-electronic sensor, indicated 2, is preferably fitted at a point facing the rear portion of the rear-view mirror R and in a peripheral position such that it does not reduce the field of vision provided by the rear-view mirror. A signalling device 4 is located inside the vehicle, corresponding to the attachment for the rear-view mirror R. The electronic processing unit is mounted inside the rear-view mirror R or, optionally, inside the vehicle.

The sensor may be of the so-called CCD-type currently used widely in telecameras for video recording. Alternatively, in the embodiment described, the sensor consists of a device comprising a single row (substantially horizontal in the preferred operating position) of light-sensitive components in order to reduce considerably the cost and complexity of the device according to the invention, instead of a CCD device comprising a complete matrix of light-sensitive components of the type used in telecameras.

A sensor 2 of this type is shown in Figure 3 where one of the light-sensitive components of the sensor itself is indicated F. The light-sensitive components F are elongate in shape, for example rectangular, in a direction perpendicular to the row consisting of the components F. In order to ensure that the sensor 2 monitors the required spatial region, an optical lens, indicated 6 in Figure 4, is usually fitted in front of this region such that it can determine the field of vision.

It is further provided that the sensor 2 is adapted to the various light conditions which can be encountered in use, varying its own exposure conditions and modifying the exposure times or the aperture of a diaphragm which may be fitted.

Figure 4 also shows a complete block diagram of the device itself. In particular the electronic processing unit is indicated 3, a signalling unit is indicated 4, and an information system on board the vehicle is generally indicated 5.

As stated above, the device 1 is to supply information to the driver of the vehicle V1 when another vehicle, such as the vehicle V2 in Figure 1, is in the blind zone B and is approaching the vehicle V1. In addition to the position of the vehicle V2, the device 1 according to the invention can therefore detect its movement relative to the vehicle V1. This is necessary since the device 1, mounted on a vehicle, itself moves relative to the road, to everything which is is stationary (for example, other vehicles which are parked), to everything moving at a slower speed and, naturally, to vehicles which are moving away from the vehicle V1. The latter vehicles, similar to parked vehicles, are certainly not able to give rise to risks of collision with the vehicle V1, for which reason the signalling of their presence would distract the driver.

It is further provided that the device 1 can function in different modes during normal operation and in particular operating conditions, such as stopping or reversing, so as to prevent the generation of undesirable signals during these manoeuvres.

The device 1 is connected to the on-board information system 5 such that it can provide the driver of the vehicle V1 with significant signals for situations which are effectively dangerous such that the device 1 itself is truly useful to the driver and is not ignored. In fact, a device which frequently emits unnecessary alarm signals is in most cases very soon ignored or disregarded by a driver. However, a small percentage of false alarms is tolerable in order to ensure high safety margins, that is to say, very few missed alarms.

More spcifically, the on-board information system 5, or in its absence sensors installed on board the vehicle, provides the device 1 with the information it requires for determining whether the vehicle driver at least intends to move to one side. For this purpose, the information required by the device 1 is, for example, the vehicle's speed, its acceleration (derivable from the speed), the steering angle, the gear in use, the actuation of the direction indicators, the pressure on the accelerator pedal and the position of the driver's head.

If the information system 5 also has information relating to the position and orientation of the vehicle, the road network on which the vehicle is travelling, and the driver's itinerary, this information may be useful in determining the driver's intentions with a greater degree of reliability. Furthermore, some of this information, for example the gear in use or the speed, is necessary for distinguishing the aforementioned different operating conditions (reversing, manoeuvring).

To give an example, if the vehicle is proceeding along a substantially straight path and the driver accelerates and simultaneously starts to steer towards the left hand side, the device 1 can reasonably assume that the drive intends to overtake or change lane even if he has not actuated the left hand direction indicator. In this case, the device 1 can emit an alarm signal if it simultaneously detects a vehicle approaching in the blind area B.

For example, the device 1 emits a visual signal by means of an LED forming part of the signalling unit 4 whenever it detects a vehicle in the region B. A signal of this type does not distract the driver's attention; however it is present if the driver wishes to use the device 1, for example before overtaking, to confirm that there are no vehicles in the blind area B.

If, on the contrary, an effectively dangerous situation is noted, such as the one described in the present example, the device 1 may, in addition to the light signal, also activate an audible signal by means of a loudspeaker or other similar device forming part of the signalling unit 4, so as to attract the driver's attention should he be distracted.

Furthermore, in order to ensure even greater driving safety, the device 1 can perform further actions with respect to what has been described above.

In the case in which the device 1 detects, for example, the intention of the driver of the vehicle V1 to change lane or to move to one side, the device can actuate the corresponding direction indicator if it has not previously been actuated by the driver of the vehicle V1.

On the other hand, in the case in which the device 1 detects a situation presenting a risk of collision, because of a rapidly approaching vehicle V2, the device can actuate the hazard warning lights, typically the direction indicators actuated simultaneously, to attract the attention of the driver of the rapidly approaching vehicle V2.

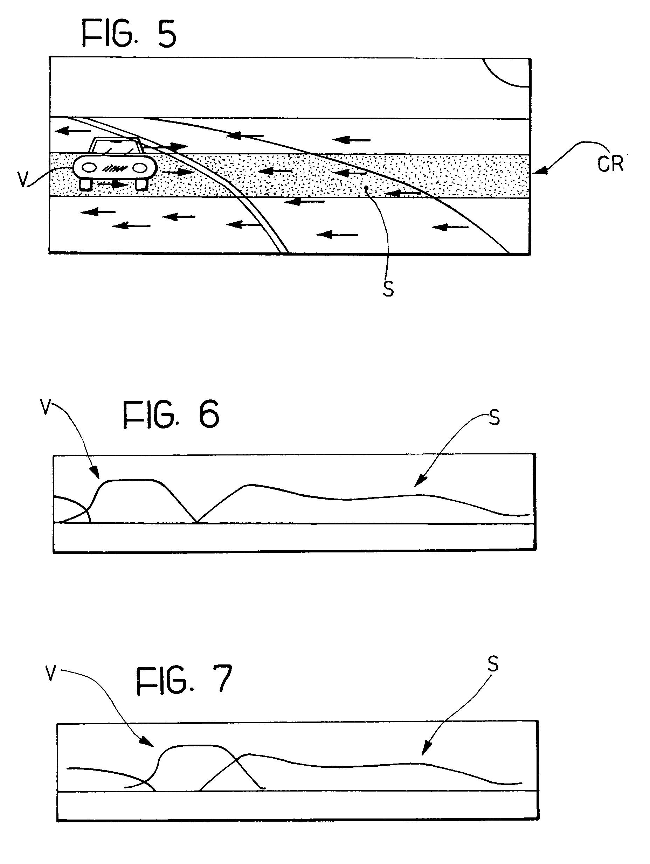

With reference to Figures 5, 6 and 7 the manner in which the device 1 detects the position and relative movement of other vehicles present in the blind area B will now be described.

Figure 5 shows schematically an image of the visual field available to the sensor 2. From this image it can be seen that the detection field effectively concerning the sensor 2 is a substantially horizontal strip of reduced height of the complete field of vision in which the vehicles, indicated V, are located, situated in the vicinity of the vehicle V1 in which the device 1 is installed. In Figure 5 this strip is indicated CR and permits the use of a sensor 2 consisting of a single row of light-sensitive components F of the type described above and illustrated in Figure 3.

The information which the sensor 2 detects is the development of the light intensity along the horizontal axis of the detection field CR. A development of this type if the light intensity can thus be shown as a curve on a cartesian diagram in which the horizontal axis represents the horizontal axis of the detection field CR and the light intensity is shown on the vertical axis. Two curves of this type, relative to images detected in two successive moments (or different moments depending on the terminology used in the claims) are shown in Figures 6 and 7 respectively.

The position and movement of vehicles in the zone monitored by the sensor 2 can be detected by techniques known for analysing image flows. For example, the image in Figure 5 shows an approaching vehicle, indicated V, which is thus moving relative to the background, indicated S, of the image. Correspondingly, Figures 6 and 7 show curve portions V and S as they correspond with the developments of the light intensity measured for the vehicle V and for the background S.

By the analysis of the movement and deformation (enlargement or reduction) of the curve portions V and S, the processing unit 3 can determine the presence of objects in the spatial region B monitored by the sensor 2 and their movement relative to the vehicle V1 on which the device 1 is installed.

In practice, the device 1 determines the presence of approaching vehicles by analysis and comparision between two images taken in successive moments (close to one another). In the images the approaching vehicles move in opposite directions relative to the surrounding road or to the vehicles moving away. Utilising such a difference in apparent movement, which can be detected in images taken at different moments, it is thus possible to detect approaching vehicles.

All the detecting and differentiating functions, as well as the selection and actuation of the signals, are performed by the processing unit 3. In accordance with widely known technology, this unit may be produced using, for example, a modern microprocessor structure.

If the vehicle is provided with rear-view devices different from the mirrors generally used, such as, for example, devices employing telecameras and television monitors or bundles of optical fibres, the device 1 may still have a form substantially similar to the one described, but it may be produced according to a different embodiment. For example, in the case of a rear-view device using a telecamera, the sensor 2 may be substituted with the telecamera, but on the other hand, in the case of a rear view device using an optical fibre bundle, the sensor 2 may receive the image from the optical fibres.

Naturally, the principle of the invention remaining the same, the details of construction may be varied widely with respect to those described and illustrated purely by way of example, without thereby departing from the scope of the present invention.

## Claims

1. A device (1) for detecting relative positions of vehicles, characterised in that it comprises:
- optical detection means (2) which can be mounted on a vehicle (V1) provided with at least one rear-view device (R) which affords the view of a first given spatial region (A) at the rear of the vehicle (V1) itself; the said optical detection means being able to emit output signals (V, S) which are representative of the visual field in a second given spatial region (B) at the rear of the vehicle (V1) and at least partially separated from the said first spatial region (A);
- processing means (3) which are operatively connected to the said optical detection means (2) and which can detect vehicles (V2) approaching the said vehicle (V1) in the said second given spatial region (B) by processing the said relative output signals (V, S) at different moments.

2. A device (1) according to Claim 1, characterised in that the said processing means (3) are operatively connected to further detection means (5) which can supply further output signals indicating physical objects relative to the said vehicle (V1) and which can detect situations presenting a risk of collision with the said approaching vehicles (V2) based on the determination of the future path of the said vehicle (V1) using the said further output signals.

3. A device (1) according to Claim 2, characterised in that the said further detection means (5) comprise detection means selected from the group comprising detection means which can supply output signals indicating sizes selected from the group consisting of:
- the steering wheel angle,
- the vehicle speed,
- the angular speed of the vehicle,
- the position of the driver's head,
- the orientation of the vehicle,
- the position of the vehicle relative to the road,
- the situation of the controls,
- the geometry of the road.

4. A device (1) according to Claim 1, characterised in that the said optical detection means (2) comprise means for varying the light exposure conditions to allow the said optical detection means (2) to receive an optimum amount of light.

5. A device (1) according to Claim 1 or Claim 4, characterised in that the said optical detection means comprise an opto-electronic sensor (2) produced by CCD technology.

6. A device (1) according to Claim 1, Claim 4 or Claim 5, characterised in that the said optical detection means (2) comprise optical means (6) which can delimit the detection field (CR) of the said optical detection means (2) substantially to the said second given spatial region (B).

7. A device (1) according to any one of Claims 1 to 6, characterised in that the said optical detection means (2) comprise a plurality of light-sensitive components (F).

8. A device (1) according to Claim 7, characterised in that the said light-sensitive components (F) are disposed substantially along a flat, two-dimensional matrix.

9. A device (1) according to Claim 7, characterised in that the said light-sensitive elements (F) are disposed substantially along a linear segment.

10. A device (1) according to Claim 9, characterised in that the said light-sensitive components (F) have an elongate shape in a direction substantially perpendicular to the said linear segment.

11. A device (1) according to Claim 9 or Claim 10, characterised in that the said output signals (V, S) indicate the light intensity along a substantially horizontal strip (CR) which is the detection field (CR) of the said optical detection means (2).

12. A device (1) according to Claim 1 or Claim 11, characterised in that the said processing means (3) detect the said approaching vehicles (V2) by analysing the progress of images of the said output signals (V, S).

13. A device (1) according to any one of the preceding claims, characterised in that it comprises signalling means (4) which are operatively connected to processing means (3) and can send signals to the driver of the said vehicle (V1) to inform him of the presence of the said approaching vehicles (V2) in the said second given spatial area (B) and the presence of the said situations presenting a risk of collision.

14. A device (1) according to Claim 13, characterised in that the said signalling means (4) comprise optical warning means.

15. A device (1) according to Claim 13, characterised in that the said signalling means (4) comprise audible warning means.

16. A device (1) according to any one of the preceding claims, characterised in that the said processing means (3) comprise electronic circuits of the integrated type.

17. A device (1) according to any one of the preceding claims, characterised in that the said processing means (3) comprise a microprocessor.

18. A device (1) according to any one of the preceding claims, characterised in that the said optical detection means (2) are mounted on the said rear-view device (R).

19. A device (1) according to any one of the preceding claims, characterised in that the said processing means (3) are mounted in the said rear-view device (R).

20. A device (1) according to Claim 18, characterised in that the said rear-view device is an external rear-view mirror (R).

21. A device (1) according to Claim 18, characterised in that the said rear-view device is an internal rear-view mirror.

22. A device (1) according to Claim 18, characterised in that the said rear-view device (R) comprises televisual detection means facing the rear relative to the vehicle (V1) and televisual display means connected for operation to the said televisual detection means, and in that the said optical detection means (2) are incorporated in the said televisual detection means.

23. A device (1) according to Claim 22, characterised in that the said televisual detection means are a telecamera and the said televisual display means are a television monitor.

24. A device (1) according to Claim 18, characterised in that the said rear view device (R) comprises optical guide means, and in that the said optical means (6) are incorporated in the said optical guide means.

25. A device (1) according to Claim 24, characterised in that the said optical guide means are optical fibres.

26. A device (1) according to any one of the preceding claims, characterised in that it can actuate direction indicator means mounted on board the said vehicle (V1) on the basis of the determination of the future path of the said vehicle (V1) if the said direction indicator means have not previously been actuated by the driver of the vehicle (V1).

27. A device (1) according to any one of the preceding claims, characterised in that it can actuate emergency signalling means, mounted on board the said vehicle (V1), following detection of situations presenting an increased risk of collision with the said approaching vehicles (V2) on the basis of the determination of the future path of the said vehicle (V1) in order to attract the attention of the drivers of the approaching vehicles (V2).

28. A device (1) according to Claim 27, characterised in that the said processing means (3) detect the said situations presenting an increased risk of collision on the basis of the high relative speed of approach of the said vehicle (V1) and the said approaching vehicles (V2).

29. A device (1) according to Claim 27, characterised in that the said emergency signalling means comprise means which can actuate the said direction indicator means simultaneously.
